# EUROPÄISCHE PATENTSCHRIFT

(11) **EP 0 623 456 B1**
(45) Veröffentlichungstag und Bekanntmachung des Hinweises auf die Patenterteilung: **23.10.1996**
(21) Anmeldenummer: 94104263.2
(22) Anmeldetag: 18.03.1994
(51) Int. Cl.: B30B 11/08, B30B 15/00

(54) **Rundlauf-Tablettenpresse**
Rotary tabletting machine
Machine de fabrication de tablettes à table tournante

(30) Priorität: 05.05.1993 DE 9306785 U
(43) Veröffentlichungstag der Anmeldung: 09.11.1994
(73) Patentinhaber: KILIAN & Co. GmbH, D-50735 Köln (DE)
(72) Erfinder: Krämer, Hans, Dipl.-Ing., D-51143 Köln (DE)
(74) Vertreter: Hennicke, Albrecht, Dipl.-Ing.

(56) Entgegenhaltungen:
- DE-C- 670 180
- GB-A- 2 046 169
- GB-A- 2 090 185
- US-A- 3 533 360
- SOVIET INVENTIONS ILLUSTRATED Section PQ, Week 7943, 5. Dezember 1979 Derwent Publications Ltd., London, GB; AN 79-K1279B & SU-A-643 369 (MOSCOW CHEM EQUIP. INST.) 28. Januar 1979

## Beschreibung

Die Erfindung betrifft eine Rundlauf-Tablettenpresse mit rotierendem Matrizentisch und Ober- und Unterstempeln, die koaxial zu den Matrizen in Stempelführungen hubbeweglich sind und von denen alle Oberstempel und alle Unterstempel mit ihren Stempelschäften an jeweils einer flexiblen, ringförmigen Zwischenwand abdichtend befestigt sind, die zwischen dem Matrizentisch und den Oberstempelführungen bzw. den Unterstempelführungen angeordnet und mindestens mit ihrem Innenrand am Matrizentisch abdichtend befestigt ist.

Um den beim Pressen von Tabletten in Rundlauf-Tablettenpressen umherwirbelnden Pressgutstaub von den Stempelschäften fernzuhalten, ist es bekannt (DE-PS 30 49 597), zwischen dem Matrizenteller und den Stempelführungen im Matrizentisch eine ringförmige Dichtwand anzuordnen, die mit ihrem Innenrand am Matrizentisch befestigt ist und im Kreis angeordnete Löcher hat, in denen die Stempelschäfte sitzen. Hierdurch befinden sich nur die in den Matrizen eintauchenden Pressköpfe der Stempel in dem stauberfüllten Bereich oberhalb und unterhalb des Matrizentellers, während die in ihren Gleitführungen im Matrizentisch auf- und niederbewegten Stempelschäfte dem Zutritt von Staub weitgehend entzogen sind.

Im Betrieb dieser bekannten Presse hat sich jedoch gezeigt, daß ein vollständiger Staubschutz der mit einem Schmierfilm überzogenen Stempelschäfte nicht zu erreichen ist, da die Stempel bei ihrem Rundlauf voneinander verschiedene Auf- und Abbewegungen ausführen und hierdurch die Zwischenwand, in der die Stempelschäfte stecken und an der sie befestigt sind, ungleichmäßig verformt wird. Insbesondere wurde die Zwischenwand im Bereich zwischen den in Umfangsrichtung dicht aufeinanderfolgenden Stempeln sehr stark gezerrt und hoch beansprucht, da sich ja der Abstand zwischen benachbarten Stempeln im Bereich ihrer Befestigungsstellen ändert, wenn diese Befestigungsstellen benachbarter Stempel beim Pressvorgang in verschiedene Höhenlagen gelangen. Diese, in rascher Folge immer wieder auftretenden Zerrkräfte in Umfangsrichtung führen rasch zu einer Ermüdung des Elastomers, aus dem die Zwischenwände hergestellt sind, und es kommt zu Rissen in der Zwischenwand. Die Stempelschäfte sitzen dann nicht mehr fest in den ihnen zugeordneten Löchern der Zwischenwand, sondern ziehen sich aus dieser heraus, wobei die Zwischenwand gleichzeitig zerreißt und unbrauchbar wird.

Aufgabe der Erfindung ist es, die Dichtwand bei einer Rundlauf-Tabelettenpresse der eingangs näher erläuterten Art so zu verbessern, daß sie einen vollständigen Staubschutz für die auf- und niedergehenden Stempelschäfte gewährleistet, mit geringem Aufwand herzustellen und zu montieren ist und auch nachträglich noch in vorhandene Rundlauf-Tablettenpressen eingebaut werden kann.

Diese Aufgabe wird mit der Erfindung dadurch gelöst, daß die flexible ringförmige Zwischenwand im Bereich eines jeden Stempels eine dessen Stempelschaft mit Abstand umgebende Öffnung und eine elastische Tülle aufweist, deren einer Rand mit dem Öffnungsrand der Zwischenwand dicht verbunden und deren anderer Rand am Stempelschaft abdichtend befestigt ist.

Diese Ausgestaltung hat den Vorteil, daß zwischen aufeinanderfolgenden Stempeln im Bereich der Zwischenwand große Dehnungen und Stauchungen möglich sind, die durch die Gestaltänderung der verformenden Tüllen, und nicht nur durch die Elastizität des Zwischenwandmaterials aufgefangen werden. Wenn sich die Zwischenwand zwischen benachbarten Stempeln schrägstellt, können sich benachbarte Öffnungen in der Zwischenwand mit ihrem Außenrand an den Umfang der ihnen zugeordneten Stempel anlegen. Da die Tüllen mit einem Rand an den Stempeln befestigt sind und diese dicht umschließen, gibt es gleichwohl keine Undichtheit, so daß der beim Pressen in den Matrizen sich entwickelnde Staub auch nicht an die jenseits der Zwischenwand befindlichen Stempelschäfte gelangen kann.
Besonders zweckmäßig ist es, wenn die Tüllen an ihrem am Stempelschaft zu befestigenden Rand einen Wulst aufweisen, der in eine am Stempelschaft angeordnete, umlaufende Nute eingreift. Hierdurch wird eine staubdichte Verbindung geschaffen, die auch genügend elastisch ist, um einer Seitwärtsbewegung des gegenüberliegenden Randes der Tülle keinen Widerstand entgegenzusetzen.

Die Tülle besteht zweckmäßig mit der Zwischenwand aus einem Stück und erstreckt sich von dieser aus axial in Richtung auf die Matrize. Hierbei bestehen Zwischenwand und Tülle in vorteilhafter Weise aus einem geruch- und geschmackfreiem Elastomer, wie es üblicherweise bei Vorrichtungen verwendet wird, die der Verarbeitung von Lebensmitteln und Arzneimitteln dienen.

Die über die Ebene der Zwischenwand vorspringenden Tüllen gestatten eine ungehinderte Seitwärtsbewegung des mit dem Öffnungsrand der Zwischenwand verbundenen einen Randes der Tülle, so daß das elastische Material nicht überbeansprucht wird, aus dem die Zwischenwand besteht. Bei der Zwischenwand zum Abdichten der Oberstempel haben die hier nach unten über die Zwischenwand vorstehenden Tüllen außerdem den Vorteil, daß ihr von dem Stempelschaft und der diesen umgebenden Tüllenwand gebildete Ringraum Schmiermittel und andere Verunreinigungen auffangen kann, die von den Stempelführungen auf die Oberseite der Zwischenwand gelangen. Dies ist insbesondere dann vorteilhaft, wenn die ringförmige Zwischenwand zur leichteren Montage und Demontage radial geteilt und an dieser Stelle durch Knopfleisten o.dgl. wieder verbunden wurde. An dieser Nahtstelle durchtretendes Schmiermittel wird dann leicht in einer darunter angeordneten Tülle aufgefangen, die zweckmäßig in der Nähe einer solche Montagenaht angeordnet wird.

Damit die an der Zwischenwand angeordneten Tüllen den beim Rundlauf der Presse in Umfangsrichtung und in Vertikalrichtung auftretenden Zerrungen und Stauchungen gut folgen können, ohne in ihrem Material zu hoch beansprucht zu werden, ist es zweckmäßig, wenn die Tülle als Faltenbalg ausgebildet ist. Es steht dann für die unterschiedliche Axialbewegung benachbarter Presstempel genügend Wandlänge der Tüllen zur Verfügung, welche die Stempel umschließen.

Um auch nach außen hin eine gute Abdichtung der Stempelführungen zu erreichen, kann der Außenrand der Zwischenwand in eine elastische, sich im wesentlichen axial erstreckende Ringwand übergehen, die als Faltenbalg ausgebildet und mit ihrem freien Rand an Matrizentisch abdichtend befestigt ist. Die Ausbildung der Ringwand als Faltenbalg erlaubt große und über den Umfang unterschiedliche Bewegungen der Zwischenwand, ohne daß hierdurch eine hohe Beanspruchung des Materials auftritt, aus dem die Zwischenwand gefertigt ist. Vor allem aber kann die Zwischenwand auch gasdicht an dem Stempelführungsteil der Matrize angeschlossen werden, so daß auch im Bereich der Presstationen für die Oberstempel keine besondere Dichtwand mehr vorgesehen werden muß, an denen der Außenrand der Zwischenwand entlanggleitet und wo ein dichter Anschluß bei der bekannten Vorrichtung nicht zu erreichen war.

Besonders zweckmäßig ist es, wenn der Innenrand der Zwischenwand und der freie Rand der Ringwand mit Spannbändern am Matrizentisch festgeklemmt sind, die auch mit Schnellverschlüssen versehen sein können. Hierdurch kann die Zwischenwand sehr rasch abgenommen werden, wobei die Tüllen leicht von den Stempelschäften abgestreift werden können.

Um trotz großer Beweglichkeit auch eine gewisse Formstabilität der abdichtenden Zwischenwände zu erreichen, kann die Ringwand von zwei Faltenbälgen gebildet werden, die durch einen zylindrischen Wandteil miteinander verbunden sind.

Weitere Merkmale und Vorteile der Erfindung ergeben sich aus der nachfolgenden Beschreibung und den Zeichnungen, in denen eine bevorzugte Ausführungsform der Erfindung an einem Beispiel näher erläutert ist. Es zeigt:
- Fig. 1: eine Rundlauf-Tablettenpresse nach der Erfindung in einem senkrechten Teilschnitt durch den Matrizentisch,
- Fig. 2: die Zwischenwand zur Abdichtung der Stempelführungen in einer Teildraufsicht in vergrößertem Maßstab und
- Fig. 3: einen Querschnitt durch die Nahtstelle der Zwischenwand nach Fig. 2

Die in den Zeichnungen dargestellte Rundlauf-Tablettenpresse 10 hat einen Matrizentisch 12, der mit der Hauptwelle 11 horizontal umläuft und einen oberen Stempelführungsring 13 und einen unteren Stempelführungsring 14 aufweist, die drehfest miteinander verbunden sind. Der obere Stempelführungsring 13 trägt an seinem unteren Rand den Matrizenteller 15, in dem die Matrizenbohrungen 16 im Kreis angeordnet sind, in denen die Matrizen 17 sitzen. Koaxial zu den Matrizen 17 sind im Matrizentisch 12 im oberen Stempelführungsring 13 Oberstempel 18 und im unteren Stempelführungsring 14 Unterstempel 19 angeordnet, deren Stempelschäfte 20 bzw. 21 in Stempelführungen 22 bzw. 23 gleitend geführt sind.

Jeder Matrize 17 ist jeweils ein Oberstempel 18 und ein Unterstempel 19 zugeordnet, deren Fußenden 24 bzw. Kopfenden 25 in Gleitschienen 26 bzw. 27 gleiten, welche die Auf- und Abbewegung der Stempel 18 und 19 beim Rundlauf der Presse steuern.

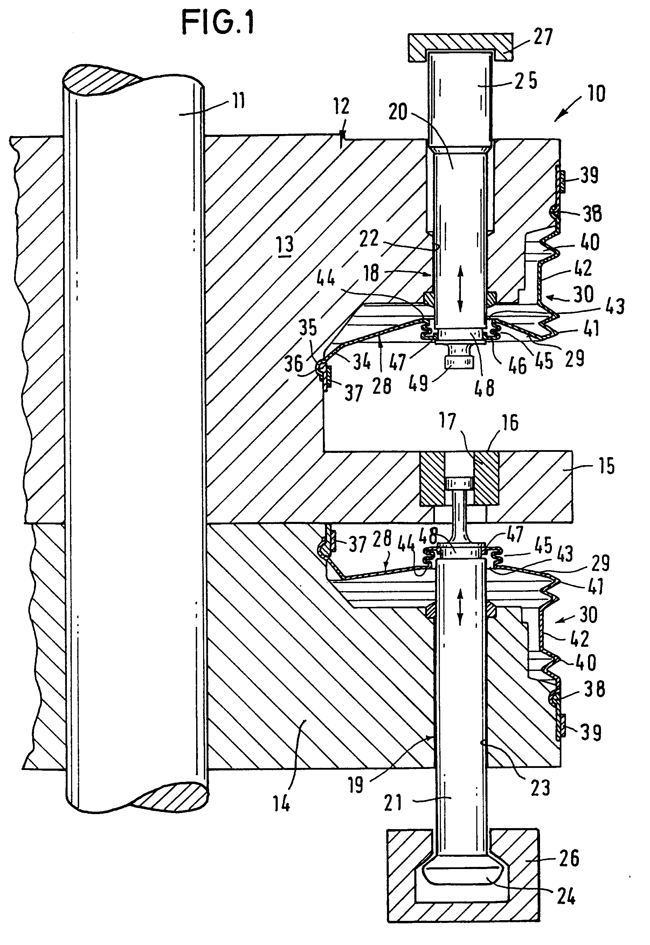

Man erkennt aus Fig. 1, daß zwischen der oberen Stempelführung 22 und dem Matrizenteller 15 einerseits und zwischen der unteren Stempelführung 23 und dem Matrizenteller 15 andererseits je eine Zwischenwand 28 angeordnet ist. Da diese beiden Zwischenwände im wesentlichen gleich ausgebildet sind, soll im folgenden nur die Zwischenwand 28 zwischen der oberen Stempelführung 22 und dem Matrizenteller 15 beschrieben werden.

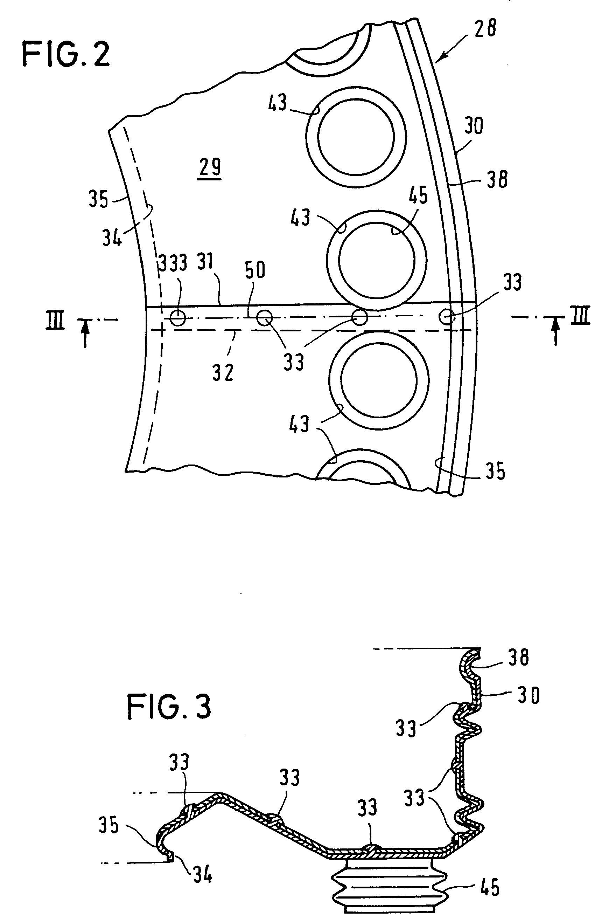

Die Zwischenwand 28, die aus einem medizinisch unbedenklichen Elastomer besteht, hat einen im wesentlichen horizontal angeordneten, ringförmigen Basisteil 29 und eine sich im wesentlichen axial erstreckende Ringwand 30, die mit dem Basisteil 29 aus einem Stück besteht. Die gesamte Zwischenwand 28 ist sowohl im Basisteil 29 als auch im Bereich ihrer Ringwand 30 radial aufgeschnitten und an den einander überlappenden Rändern 31 und 32 durch Druckknöpfe 33 wieder verbunden. Hierdurch kann die Zwischenwand 28 leicht geöffnet und wieder geschlossen werden (Fig. 2).

Man erkennt aus Fig. 1, daß der Innenrand 34 der Zwischenwand 28 einen umlaufenden, nach außen vorspringenden Wulst 35 aufweist, der in eine im Querschnitt halbkreisförmige Nute 36 des Matrizentisches 12 eingreift und dort mit einem Spannband 37 mit einem nicht näher dargestellten Schnellverschluß befestigt ist. In gleicher Weise ist der obere, freie Rand 38 der Ringwand 30 am Außenumfang des Matrizentisches 12 mit einem Spannband 39 festgeklemmt.

Die Ringwand 30 besteht aus zwei axial übereinander angeordneten Faltenbälgen 40 und 41, die durch einen zylindrischen Wandteil 42 miteinander verbunden sind. Die Faltenbälge 40 und 41 bestehen ebenso wie der zylindrische Wandteil 42 aus einem Elastomer, beispielsweise aus Kautschuk oder einem gummielastischem Kunststoff und bilden mit dem Basisteil 29 der Zwischenwand 28 ein Stück.

Man erkennt aus den Fig. 1 und 2, daß die flexible, ringförmige Zwischenwand 28 im Bereich eines jeden Stempels 18 eine kreisrunde Öffnung 43 aufweist, die den Stempelschaft 20 mit Abstand umgibt. An jedem Öffnungsrand 44 ist eine als Faltenbalg ausgebildete Tülle 45 angeformt, die mit dem Basisteil 29 der Zwischenwand 28 aus einem Stück besteht und sich von der Zwischenwand 28 aus axial in Richtung auf die Matrize 17 erstreckt. Die Tülle 45 hat an ihrem freien Rand 46 einen Wulst 47, der sich unter Vorspannung in eine umlaufende Nute 48 legt, die am unteren, mit dem Stempelkopf 49 versehenen Ende des Stempelschaftes 20 angeordnet ist.

Die als Faltenbälge ausgebildeten Tüllen 45, die ebenso wie die Zwischenwand 28 und deren Ringwand 30 aus einem Elastomer bestehen, können sich in Axialrichtung der Stempelschäfte 20 strecken, aber auch mit ihrem oberen Rand radiale und in Umfangsrichtung der Zwischenwand 28 gerichtete Bewegungen ausführen. Sie können außerdem einer Schrägstellung der Zwischenwand 28 in Umfangsrichtung folgen, wobei die in Radialrichtung anschließenden Flächen der Zwischenwand 28, die ja außen noch an die als Faltenbalg ausgebildete Ringwand 30 angeschlossen sind, diesen Bewegungen keinen Widerstand entgegensetzen. Es kommt also in der Zwischenwand 28 auch dann nicht zu hohen, schädlichen Beanspruchungen, wenn die Presse mit sehr hoher Geschwindigkeit umläuft und die Ober- und Unterstempel während des Umlaufes ihre rasch auf- und niedergehenden Bewegungen ausführen. Da die Tüllen im Bereich ihrer freien Ränder 46 nicht beansprucht werden, können sie hier ihre Dichtwirkung einwandfrei erfüllen. Auch der Innenrand 34 und der freie Außenrand 38 der Zwischenwand wird bei der Auf- und Abbewegung der Pressenstempel kaum beansprucht, so daß auch hier ein einwandfrei dichter Sitz gewährleistet ist.

Man erkennt aus Fig. 2, daß die Tüllen 45 von zwei in Umfangsrichtung aufeinanderfolgenden Pressenstempeln unmittelbar neben der Verbindungsnaht 50 angeordnet sind, die von den einander überlappenden Radialrändern 31 und 32 der Zwischenwand 28 gebildet werden. Hierdurch ist es möglich, daß Schmierstoff von den Stempelschäften 20 der Oberstempel 18, der auf die Oberseite der Zwischenwand 28 gelangt und durch die Fuge zwischen den einander überlappenden Rändern 31 und 32 nach unten durchtritt, in die Tülle 45 fließt, welche dem unteren Rand 32 der Verbindungsnaht 50 benachbart ist. Diese, die Verbindungsnaht durchdringenden Fremdkörper werden auf diese Weise festgehalten und unschädlich gemacht.

Die Erfindung ist nicht auf das dargestellte und beschriebene Ausführungsbeispiel beschränkt, sondern es sind mehrere Änderungen und Ergänzungen möglich, ohne den Rahmen der Erfindung zu verlassen. Beispielsweise könnten auch in dem horizontalen Teil der Zwischenwand 28 eine oder mehrere Falten angeordnet sein. Ferner ist es möglich, die Tülle zylindrisch oder kegelstumpfförmig auszubilden und in etwas anderer Weise am Stempelschaft zu befestigen. Ferner können der Innenrand und der Außenrand der Dichtmanschette auch an der Matrize angeklebt oder auf andere Weise befestigt sein, wesentlich ist nur, daß die Stempelführung, d.h. der Raum, in dem sich die Stempel bewegen, vollständig gegen Staub abgeschirmt wird.

Weiterhin ist es möglich, die Zwischenwände als ungeteilte, ringförmige Dichtwände auszuführen, wenn eine besondere Ausgestaltung des Matrizentisches den Einbau solcher ungeteilten Dichtwände zuläßt. Bei geteilten Dichtwänden kann die Verbindungsnaht auch mit einem Reissverschluß oder einem Klettverschluß hergestellt werden.

## Patentansprüche

1. Rundlauf-Tablettenpresse mit rotierendem Matrizentisch (12) und Ober- und Unterstempeln (18,19), die koaxial zu den Matrizen (17) in Stempelführungen (22,23) hubbeweglich sind und von denen alle Oberstempel (18) und alle Unterstempel (19) mit ihren Stempelschäften (20,21) an jeweils einer flexiblen, ringförmigen Zwischenwand (28) abdichtend befestigt sind, die zwischen dem Matrizenteller (15) und den Oberstempelführungen (22) bzw. den Unterstempelführungen (23) angeordnet und mindestens mit ihrem Innenrand (34) am Matrizentisch (12) abdichtend befestigt ist, **dadurch gekennzeichnet, daß** die flexible ringförmige Zwischenwand (28) im Bereich eines jeden Stempels (18,19) eine dessen Stempelschaft (20,21) mit Abstand umgebende Öffnung (43) und eine elastische Tülle (45) aufweist, dessen einer Rand mit dem Öffnungsrand (44) der Zwischenwand (28) dicht verbunden und deren anderer, freier Rand (46) am Stempelschaft (20,21) abdichtend befestigt ist.

2. Presse nach Anspruch 1, **dadurch gekennzeichnet, daß** die Tülle (45) an ihrem am Stempelschaft (20) zu befestigenden Rand (46) einen Wulst (47) aufweist, der in eine am Stempelschaft (20) angeordnete, umlaufende Nute (48) eingreift.

3. Presse nach Anspruch 1 oder 2, **dadurch gekennzeichnet, daß** die Tülle (45) mit der Zwischenwand (28) aus einem Stück besteht und sich von dieser aus axial in Richtung auf die Matrize (17) erstreckt.

4. Presse nach einem der Ansprüche 1 bis 3**, dadurch gekennzeichnet, daß** die Tülle (45) als Faltenbalg ausgebildet ist.

5. Presse nach einem der Ansprüche 1 bis 4, **dadurch gekennzeichnet, daß** der Außenrand Zwischenwand (28) in eine elastische sich im wesentlichen axial erstreckende Ringwand (30) übergeht, die als Faltenbalg ausgebildet und mit ihrem freien Rand (38) am Matrizentisch (12) abdichtend befestigt ist.

6. Presse nach einem der Ansprüche 1 bis 5, **dadurch gekennzeichnet, daß** der Innenrand (34) der Zwischenwand (28) und der freie Rand (38) der Ringwand (30) mit Spannbändern (37,39) am Matrizentisch (12) festgeklemmt sind.

7. Presse nach einem der Ansprüche 1 bis 6, **dadurch gekennzeichnet, daß** die Ringwand (30) von zwei Faltenbälgen (40,41) gebildet wird, die durch einen zylindrischen Wandteil (42) miteinander verbunden sind.

8. Presse nach einem der Ansprüche 1 bis 7, **dadurch gekennzeichnet, daß** im Bereich einer radialen Verbindungsnaht (50) in der Zwischenwand (28) mindestens eine Tülle (45) angeordnet ist.

## Claims

1. A rotary tabletting press having a rotating die table (12) and top and bottom punches (18, 19) which can move up and down, coaxially with the dies (17), in punch guides (22, 23), and all the top punches (18) and all the bottom punches (19) of which are each fixed with their punch shanks (20, 21) sealed to a flexible, annular diaphragm (28), which is disposed between the die plate (15) and the top punch guides (22) and the bottom punch guides (23), respectively, and which is fixed with at least its inner edge (34) sealed to the die table (12), characterised in that the flexible, annular diaphragm (28) comprises, in the region of each punch (18, 19), an opening (43) surrounding the punch shank (20, 21) thereof at a distance and a flexible bushing (45), one edge of which is imperviously attached to the edge (44) of the opening in the diaphragm (28) and the other, free edge (46) of which is attached sealed to the punch shank (20, 21).

2. A press according to claim 1, characterised in that the bushing (45) has a bead (47) at its edge (46) to be fixed to the punch shank (20), which bead engages in an encircling groove (48) disposed on the punch shank (20).

3. A press according to claim 1 or 2, characterised in that the bushing (45) consists of one piece with the diaphragm (28) and extends axially from the latter towards the die (17).

4. A press according to any one of claims 1 to 3, characterised in that the bushing (45) is constructed as an expansion bellows.

5. A press according to any one of claims 1 to 4, characterised in that the outer edge of the diaphragm (28) extends into a flexible annular wall (30) which extends substantially axially, which is constructed as an expansion bellows, and which is fixed with its free edge (38) sealed to the die table (12).

6. A press according to any one of claims 1 to 5, characterised in that the inner edge (34) of the diaphragm (28) and the free edge (38) of the annular wall (30) are clamped to the die table (12) with tightening straps (37, 39).

7. A press according to any one of claims 1 to 6, characterised in that the annular wall (30) is formed from two flexible bellows (40, 41) which are joined to each other by a cylindrical wall part (42).

8. A press according to any one of claims 1 to 7, characterised in that at least one bushing (45) is disposed in the region of a radial connecting seam (50) in the diaphragm (28).

## Revendications

1. Presse rotative pour comprimés comportant une table de matrice (12) tournante et des poinçons supérieurs et inférieurs (18, 19), qui sont mobiles, coaxialement aux matrices (17), dans des guidages de poinçon (22, 23) et dont tous les poinçons supérieurs (18) et tous les poinçons inférieurs (19) sont fixés de manière étanche avec leurs tiges de poinçon (20, 21) chacun contre une paroi intermédiaire (28) annulaire, flexible, qui est placée entre le plateau de matrice (15) et les guidages de poinçon supérieur (22) ou les guidages de poinçon inférieur (23) et est fixée de manière étanche au moins avec son bord intérieur (34) contre la table de matrice (12), caractérisée en ce que la paroi intermédiaire (28) annulaire, flexible, présente, dans la zone de chaque poinçon (18, 19), une ouverture (43), entourant à distance sa tige de poinçon (20, 21) et une douille élastique (45), dont un bord est relié de manière hermétique avec le bord d'ouverture (44) de la paroi intermédiaire (28) et dont l'autre bord libre (46), est fixé de manière à assurer l'étanchéité contre la tige de piston (20, 21).

2. Presse selon la revendication 1, caractérisée en ce que la douille (45) présente, sur son bord (46) à fixer sur la tige de piston (20), un bourrelet (47), qui s'engage dans une rainure (48) périphérique, placée sur la tige de piston (20).

3. Presse selon la revendication 1 ou 2, caractérisée en ce que la douille (45) est constituée d'une pièce avec la paroi intermédiaire (28) et s'étend à partir de celle-ci, axialement, en direction de la matrice (17).

4. Presse selon l'une des revendications 1 à 3, caractérisée en ce que la douille (45) est conformée en soufflet.

5. Presse selon l'une des revendications 1 à 4, caractérisée en ce que le bord extérieur de la paroi intermédiaire (28) se prolonge par une paroi annulaire (30) élastique, s'étendant sensiblement axialement, qui est conformé en soufflet et qui, avec son bord libre (38), est fixé de manière à assurer l'étanchéité par rapport à la table de matrice (12).

6. Presse selon l'une des revendications 1 à 5, caractérisée en ce que le bord intérieur (34) de la paroi intermédiaire (28) et le bord libre (38) de la paroi annulaire (30) sont fermement serrés contre la table de matrice (12), avec des bandes de tension (37, 39).

7. Presse selon l'une des revendications 1 à 6, caractérisée en ce que la paroi annulaire (30) est formée par deux soufflets (40, 41), qui sont reliés entre eux par une partie de paroi cylindrique (42).

8. Presse selon l'une des revendications 1 à 7, caractérisée en ce que dans la zone d'un joint d'assemblage radial (50) il est prévu dans la paroi intermédiaire (28), au moins une douille (45).
